# FASCICULE DE BREVET EUROPEEN

(11) **EP 4 536 945 B1**
(45) Date de publication et mention de la délivrance du brevet: **17.06.2026**
(21) Numéro de dépôt: 23731275.6
(22) Date de dépôt: 07.06.2023
(51) Int. Cl.: F01N 3/20

(54) **DISPOSITIF D'ALIMENTATION EN LIQUIDE POUR VÉHICULE AUTOMOBILE**
VORRICHTUNG ZUR FLÜSSIGKEITSVERSORGUNG EINES KRAFTFAHRZEUGS
DEVICE FOR SUPPLYING LIQUID TO A MOTOR VEHICLE

(30) Priorité: 07.06.2022 BE 202205437
(43) Date de publication de la demande: 16.04.2025
(73) Titulaire: OPmobility C-Power Belgium Research, 1200 Woluwe-Saint-Lambert (BE)
(72) Inventeur: BOURGOIN, Rémy, 1200 BRUXELLES (BE); NEJNAOUI, Younes, 1200 BRUXELLES (BE); KRUK, Damian, 1200 BRUXELLES (BE); CHENDOUH, Yanis, 1200 BRUXELLES (BE)
(74) Mandataire: LLR
(86) Numéro de dépôt international: PCT/EP2023/065230
(87) Numéro de publication internationale: WO 2023/237606

(56) Documents cités:
- CN-A- 105 518 266
- DE-A1- 102013 211 254
- KR-A- 20100 046 183
- US-A1- 2015 300 230
- US-B2- 9 765 665

## Description

### Domaine technique de l'invention

L'invention concerne un dispositif d'alimentation en liquide pour véhicule automobile. L'invention concerne également un réservoir de liquide pour véhicule automobile comprenant un dispositif d'alimentation en liquide selon l'invention. En outre, l'invention concerne un dispositif de réduction catalytique sélective pour véhicule automobile comprenant un réservoir de liquide selon l'invention. Enfin, l'invention concerne un véhicule automobile comprenant un réservoir de liquide selon l'invention.

### Arrière-plan technique

On connaît déjà dans l'état de la technique des dispositifs d'alimentation en liquide pour véhicule qui sont par exemple utilisés afin d'injecter une solution d'additif, notamment un précurseur d'ammoniac, dans une ligne d'échappement d'un moteur à combustion interne, afin de réaliser une réduction catalytique sélective (« Selective Catalytic Reduction » en langue anglaise, aussi appelée par son acronyme « SCR »). Cette réduction catalytique sélective permet la réduction des oxydes d'azote (NO_{X}) émis par les véhicules légers et poids lourds équipés d'un moteur à combustion interne, et donc de diminuer la pollution provoquée par ces véhicules afin de respecter les législations sur les émissions d'oxyde d'azote. La réduction catalytique sélective requiert l'utilisation d'un agent de réduction, tel que l'ammoniac, à un niveau de concentration précis et dans une qualité élevée. On utilise généralement en tant qu'additif un précurseur d'ammoniac, tel que l'urée, qui doit donc être précisément dosé et injecté dans le flux de gaz d'échappement où il est hydrolysé avant de convertir les oxydes d'azote (NO_{X}) en azote (N₂) et en eau (H₂O). Pour ce faire, il est nécessaire d'équiper les véhicules d'un réservoir contenant la solution d'additif, ainsi que d'un dispositif pour doser et injecter la quantité d'additif désirée dans la ligne d'échappement. Un tel réservoir est connu du document DE102013211254A1.

Pour éviter de boucher l'injecteur de solution d'additif avec des impuretés pouvant se trouver dans la solution d'additif, il est connu de filtrer la solution d'additif avant son injection. Dans l'art antérieur, un organe de filtration est agencé dans le réservoir d'additif à l'entrée d'une pompe d'alimentation de la solution d'additif permettant à la solution d'additif d'être pompée à travers l'organe de filtration. Par cette disposition, la solution d'additif est nettoyée de ses impuretés avant d'être injectée dans la ligne d'échappement, en amont du catalyseur de la réaction de réduction catalytique sélective. Ceci permet également de protéger la pompe d'alimentation contre les impuretés présentes dans la solution d'additif aspirée.

Après un certain temps d'utilisation, les impuretés colmatent l'organe de filtration. Le colmatage est d'autant plus rapide que les impuretés sont nombreuses et de grande taille. Cela est notamment le cas dans les régions très polluées. Lorsque le niveau de colmatage augmente, la capacité de filtration de l'organe de filtration diminue et le débit de filtration du liquide à travers l'organe de filtration devient inférieur au débit d'aspiration de la pompe d'alimentation. En conséquence, la pompe aspire en totalité ou en partie de l'air, ce qui provoque des pertes de pression d'injection du liquide par la pompe d'alimentation. Il en résulte notamment des difficultés pour doser précisément l'additif injecté et donc une diminution de l'efficacité de la réduction catalytique sélective. L'aspiration d'air est d'autant plus marquée que le niveau de liquide dans le réservoir est bas, exposant ainsi une partie de l'organe de filtration à l'air.

### Résumé de l'invention

L'invention a notamment pour but de réduire le risque de perte de pression d'injection de liquide d'un dispositif d'alimentation en liquide de véhicule automobile au cours du temps.

À cet effet, l'invention a pour objet un dispositif d'alimentation en liquide pour véhicule automobile, comprenant :
- une pompe d'alimentation destinée à pomper du liquide depuis un réservoir de liquide vers un dispositif de consommation de ce liquide, et
- un ensemble de filtration destiné à filtrer le liquide pompé par la pompe d'alimentation, l'ensemble de filtration comprenant un logement dans lequel est logé un organe de filtration,

dans lequel le logement forme un siphon raccordé à une entrée d'aspiration de la pompe d'alimentation et comporte une extrémité ouverte destinée à déboucher dans le liquide contenu dans le réservoir de liquide de façon à ce qu'un trajet de ce liquide dans le siphon passe par un niveau dit élevé, qui, lorsque le niveau du liquide dans le réservoir de liquide se situe en dessous d'un seuil prédéterminé est supérieur au niveau du liquide dans le réservoir de liquide,
dans lequel l'organe de filtration comprend une zone de filtration sous la forme d'une poche de matériau de filtration s'étendant verticalement dans le logement formant siphon, et dans lequel le dispositif d'alimentation en liquide comprend en outre un conduit d'alimentation s'étendant verticalement dans la poche entre des points hauts et bas de la poche, une première extrémité haute du conduit d'alimentation étant raccordée à l'entrée d'aspiration de la pompe d'alimentation et une deuxième extrémité basse débouchant à l'intérieur de la poche.

Ainsi, lors d'un amorçage de la pompe d'alimentation, celle-ci aspire dans un premier temps l'air qui est présent dans le logement formant siphon. Cette aspiration d'air crée une dépression qui permet d'élever le niveau de liquide dans le siphon et ainsi d'immerger l'organe de filtration dans le liquide. En conséquence, à l'issue de la période d'amorçage de la pompe d'alimentation, l'organe de filtration n'est plus en contact avec de l'air ou, pour le moins, l'organe de filtration demeure suffisamment immergé, même lorsque le niveau du liquide dans le réservoir se situe en dessous du seuil prédéterminé, pour éviter que la pompe d'alimentation aspire de l'air lors de son fonctionnement. De plus, l'immersion de l'organe de filtration restant importante, même lorsque le niveau de liquide dans le réservoir est bas, on limite efficacement l'effet de colmatage de l'organe de filtration empêchant le liquide de le traverser.

Le fait que la pompe d'alimentation n'aspire pas d'air lors de son fonctionnement empêche ainsi tout instabilité ou perte de pression pour l'injection de liquide réalisée par la pompe d'alimentation. Cela est particulièrement avantageux dans les cas où le liquide injecté par la pompe doit être dosé précisément, par exemple dans le cas où le liquide est un précurseur d'ammoniac destiné à être injecté dans une ligne d'échappement d'un moteur à combustion interne afin d'être utilisé en tant qu'additif dans une réaction de réduction catalytique sélective. Le dispositif d'alimentation en liquide peut être utilisé avec d'autres liquides, par exemple avec de l'eau ou du carburant.

On comprend que le dispositif d'alimentation en liquide selon l'invention permet d'utiliser des organes de filtration de grandes dimensions sans risquer une diminution de la pression d'injection du liquide par la pompe d'alimentation puisque l'organe de filtration n'est plus en contact avec de l'air ou, pour le moins, l'organe de filtration demeure suffisamment immergé.

Par ailleurs, puisque l'air présent dans le logement est chassé lors de l'amorçage de la pompe d'alimentation, le niveau de colmatage de l'organe de filtration a peu d'impact sur le débit de filtration de liquide puisque l'organe de filtration n'est pas au contact de l'air et ne peut donc filtrer que du liquide. Ainsi, le dispositif d'alimentation en liquide selon l'invention reste fonctionnel même pour un colmatage important de l'organe de filtration. La durée de vie de l'organe de filtration est ainsi augmentée, notamment dans les régions polluées où il a tendance à se colmater rapidement.

Le logement formant siphon, de par sa fonction, comprend une paroi qui est étanche à l'air et au liquide présent dans le réservoir. Ainsi, l'organe de filtration est en outre protégé des impuretés éventuellement présentes dans le liquide stocké dans le réservoir, augmentant ainsi la durée de vie de l'organe de filtration. Notamment les résidus huileux éventuellement présents dans le liquide restent à la surface de celui-ci et sont ainsi bloqués par le logement formant siphon qui les empêche d'atteindre l'organe de filtration.

Par « impureté », on entend désigner tout corps étranger au liquide, par exemple, des poussières, de la terre, des insectes, des copeaux du réservoir, des huiles ou des particules solides. Ces corps étrangers peuvent être en flottaison, en suspension ou déposés au fond du réservoir de liquide.

Le passage du liquide par un niveau dit élevé permet une immersion importante de l'organe de filtration dans le liquide quel que soit le niveau de remplissage du réservoir, dans la limite d'un niveau de remplissage minimum.

Le seuil prédéterminé correspond par exemple au niveau de liquide dans le réservoir pour lequel au moins une partie du logement formant siphon n'est plus immergée. De préférence, le seuil prédéterminé correspond au niveau de liquide dans le logement formant siphon pour lequel l'organe de filtration n'est plus en contact avec l'air. On comprend ainsi que l'organe de filtration demeure suffisamment immergé dans le liquide même lorsque le niveau de liquide dans le réservoir est inférieur au niveau dit élevé à l'intérieur du logement.

On comprend qu'une « poche » comprend au moins une paroi délimitant une cavité ouverte à une de ses extrémité et fermée à une autre de ses extrémités formant un fond de la poche. Selon la présente invention, on comprend que la paroi de la poche est réalisée en matériau de filtration et que du liquide peut être filtré à travers cette paroi vers l'intérieur de la poche.

Puisque la zone de filtration sous la forme d'une poche s'étend verticalement dans le logement, lorsque la poche est complètement immergée dans du liquide, par exemple une fois que la pompe a été amorcée et que l'air a été chassé du logement, la surface de filtration disponible est optimisée car toutes les faces de la poche, sur toutes leurs hauteurs et toutes leurs largeurs, peuvent être utilisées pour filtrer du liquide n'ayant pas encore été filtré. Il est ainsi possible de prévoir un ensemble de filtration particulièrement compacte et donc un dispositif d'alimentation en liquide qui soit lui aussi plus compacte.

L'invention peut également comporter l'une ou plusieurs des caractéristiques optionnelles suivantes, prises seules ou en combinaison.

Le rapport V/h, où V est le volume de l'organe de filtration et h la hauteur de l'organe de filtration, est compris entre 400 mm² et 800 mm², de préférence le rapport V/h est environ égal à 600 mm². Ce rapport permet de représenter la surface filtrante de l'organe de filtration. De tels organes de filtration présentent de bonnes propriétés de filtration. La présence du logement formant siphon permet avantageusement d'utiliser de tels organes de filtration. En effet, un organe de filtration présentant ces dimensions a de bonnes propriétés de filtration mais engendre, avec les dispositifs d'alimentation en liquide de l'art antérieur, un risque important de perte de pression d'injection de liquide à cause de son volume important qui peut se remplir facilement d'air. Le dispositif d'alimentation en liquide selon l'invention permet de chasser l'air hors du logement formant siphon lors de l'amorçage, de sorte que l'utilisation de tels organes de filtration est possible sans rencontrer ce problème.

Selon l'invention, le dispositif d'alimentation en liquide comprend un conduit d'alimentation s'étendant verticalement dans la poche entre des points hauts et bas de la poche, une première extrémité haute du conduit d'alimentation étant raccordée à l'entrée d'aspiration de la pompe d'alimentation et une deuxième extrémité basse débouchant à l'intérieur de la poche. Il s'agit d'un moyen simple de faciliter l'aspiration de la pompe en permettant notamment à l'aspiration de liquide de s'effectuer proche du niveau de liquide dans le logement formant siphon.

De préférence, l'écart Δ entre la deuxième extrémité basse du conduit d'alimentation et le fond de la poche est compris entre 10 et 90 % de la hauteur p de la poche, de préférence, l'écart Δ est environ égal à 25 % de la hauteur p de la poche. Ce positionnement de la deuxième extrémité basse du conduit d'alimentation permet d'optimiser l'aspiration de liquide par la pompe d'alimentation à travers le conduit d'alimentation que ce soit au moment de l'amorçage de la pompe ou d'une aspiration ultérieure.

La poche comprend au moins deux faces latérales de filtration, chaque face latérale de filtration étant agencée en regard et à distance d'une paroi du logement. La surface disponible pour la filtration est ainsi optimisée. En effet, on comprend que dans cet agencement les faces latérales de filtration ne sont pas en contact avec la paroi du logement et peuvent donc être en contact direct avec du liquide qui n'a pas encore été filtré. Ainsi, le liquide peut entrer dans la poche non seulement par le fond de la poche mais également par les faces latérales de filtration. La zone de filtration de l'organe de filtration est ainsi augmentée. Selon les modes de réalisation, le nombre de faces latérales peut être différent, par exemple compris entre deux et six.

Le dispositif d'alimentation en liquide comprend des moyens de chauffage du logement formant siphon. Ainsi, il est possible de dégeler le liquide éventuellement geler dans le logement formant siphon afin de permettre une utilisation du dispositif d'alimentation en liquide. On remarque que les moyens de chauffage n'ont à chauffer que le volume de liquide présent dans le logement formant siphon. Ce volume étant réduit, le dégel du liquide présent dans celui-ci est donc facilité.

La pompe d'alimentation est logée dans un boitier, l'ensemble de filtration étant agencé à l'extérieur du boitier et porté par ce boitier. Le boitier permet de regrouper et connecter entre elles de manière simple et efficace les différentes unités fonctionnelles du dispositif d'alimentation en liquide. Ainsi, la fabrication du dispositif d'alimentation en liquide est facilitée et permet d'obtenir un dispositif d'alimentation en liquide compact.

De préférence, le dispositif d'alimentation en liquide comprend en outre des moyens de fixation amovible de l'ensemble de filtration sur le boitier. La maintenance du dispositif d'alimentation en liquide est ainsi facilitée. En effet, il est alors aisé de désolidariser l'ensemble de filtration du boitier afin, par exemple, de vérifier l'état de l'organe de filtration, notamment son niveau de colmatage. Il est alors également aisé de procéder au remplacement de l'organe de filtration lorsque cela est souhaitable. En particulier, il est possible de remplacer l'organe de filtration sans avoir à effectuer de manipulations sur le reste du dispositif d'alimentation en liquide, notamment sur la pompe d'alimentation. On réduit ainsi le risque d'usure du reste du dispositif d'alimentation, augmentant ainsi sa durée de vie. Les moyens de fixation amovible peuvent consister en tous moyens connus de l'homme du métier permettant de solidariser et désolidariser de manière simple et rapide l'ensemble de filtration du boitier. De préférence, ces moyens de fixation amovible ne nécessitent pas l'utilisation d'un outil pour solidariser ou désolidariser l'ensemble de filtration du boitier. Par exemple, les moyens de fixation amovible sont des moyens de fixation par clipsage ou par vissage permettant de clipser ou visser l'ensemble de filtration directement sur le boitier. Par une fixation par vissage, on désigne ici le fait que l'ensemble de filtration comprend un filetage complémentaire d'un filetage porté par le boitier de manière à ce que l'ensemble de filtration puisse être directement vissé sur le boitier. De préférence, les filetages de l'ensemble de filtration et du boitier forment des moyens de fixation du type vis quart de tour, permettant de solidariser et désolidariser l'ensemble de filtration du boitier en appliquant une rotation d'un quart de tour, soit 90°, à l'ensemble de filtration. La fixation et le retrait de l'ensemble de filtration sont ainsi particulièrement aisés même lorsque l'espace disponible pour manœuvrer est réduit.

Le liquide est une solution aqueuse, de préférence un précurseur d'ammoniac. Dans le cas où le liquide est un précurseur d'ammoniac, le dispositif d'alimentation en liquide peut être avantageusement utilisé dans le cadre d'une réaction de réduction catalytique sélective pour purifier des gaz d'échappement d'un moteur à combustion interne. Selon un autre mode de réalisation, la solution aqueuse est de l'eau.

L'invention a également pour objet un réservoir de liquide pour véhicule automobile équipé d'un dispositif d'alimentation en liquide tel que décrit précédemment. Ainsi, selon les modes de réalisation, le réservoir peut être, par exemple, un réservoir de solution aqueuse telle que de l'eau ou de l'urée, ou un réservoir de carburant. Le réservoir peut être en une matière quelconque. Dans le cas particulier d'un réservoir de solution d'urée, la matière du réservoir est, de préférence, une matière ayant une bonne résistance chimique à l'urée. Il s'agit en général de matière plastique. Les polyoléfines, en particulier le polyéthylène et, plus particulièrement, le polyéthylène haute densité (PEHD), constituent des matériaux préférés. Ce réservoir peut être réalisé par tout procédé de transformation connu. Un mode de mise en œuvre connu est le procédé de moulage par injection. Un mode de mise en œuvre préféré est le procédé de moulage par extrusion-soufflage. Dans ce procédé, une paraison - en une ou plusieurs parties - est obtenue par extrusion puis mise en forme par soufflage dans un moule. Le moulage du réservoir d'un seul tenant à partir d'une paraison en une seule partie donne de bons résultats.

L'invention a également pour objet un dispositif de réduction catalytique sélective destiné à purifier des gaz d'échappement d'un moteur à combustion interne d'un véhicule automobile, le dispositif de réduction catalytique sélective comprenant un réservoir de liquide tel que décrit précédemment dans lequel le liquide est un précurseur d'ammoniac. Le précurseur d'ammoniac est par exemple de l'urée. Le dispositif de réduction catalytique est ainsi amélioré puisqu'il est équipé d'un dispositif d'alimentation en liquide selon l'invention qui permet de réduire le risque de perte de pression d'injection du précurseur d'ammoniac au cours du temps. Cela est particulièrement avantageux puisque, comme indiqué précédemment, il est important de doser précisément le précurseur d'ammoniac injecté dans le cadre d'une réduction catalytique sélective et la perte de pression d'injection du précurseur d'ammoniac nuit à la précision de ce dosage.

Enfin, l'invention a également pour objet un véhicule comprenant un réservoir de liquide tel que décrit précédemment.

### Brève description des figures

L'invention sera mieux comprise à la lecture de la description qui va suivre donnée uniquement à titre d'exemple non limitatif et faite en se référant aux dessins annexés dans lesquels :
[Fig.1] est une représentation schématique d'un véhicule comprenant un réservoir équipé d'un dispositif d'alimentation en liquide selon l'invention ;
[Fig.2] est une vue en perspective du dispositif d'alimentation en liquide de la [Fig.1] ;
[Fig.3] est une vue en coupe d'une partie du dispositif d'alimentation en liquide de la [Fig.1] ;
[Fig.4] est une vue en perspective d'un ensemble de filtration faisant partie du dispositif d'alimentation en liquide de la [Fig.1] ;
[Fig.5] est une vue de face d'une partie de l'ensemble de filtration de la [Fig.4] ;
[Fig.6] est une vue en coupe longitudinale de la partie de l'ensemble de filtration représenté à la [Fig.5] ; et
[Fig.7] est une représentation schématique du fonctionnement du dispositif d'alimentation en liquide de la [Fig.1].

### Description détaillée

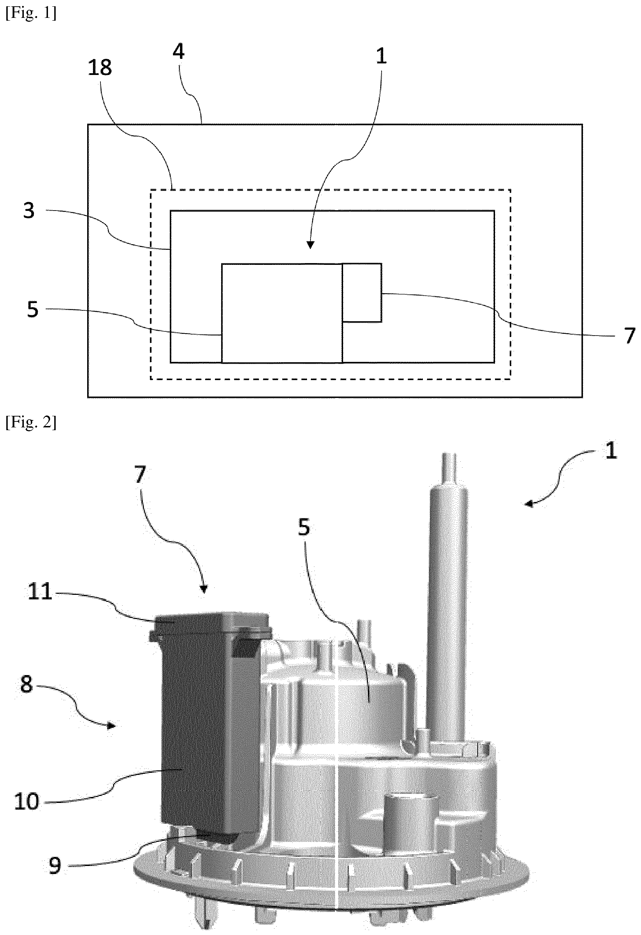

On a représenté sur les figures 1 à 7 un mode de réalisation d'un dispositif 1 d'alimentation en liquide 2 selon l'invention. Dans le cas présent, le dispositif 1 d'alimentation en liquide 2 est monté sur une paroi inférieure d'un réservoir 3 de liquide qui est lui-même monté sur un véhicule 4 automobile ([Fig.1]).

Dans le cas présent, le liquide est un précurseur d'ammoniac, tel que de l'urée. Le réservoir 3 de liquide et le dispositif 1 d'alimentation en liquide font ainsi partie d'un dispositif 18 de réduction catalytique sélective destiné à purifier des gaz d'échappement d'un moteur à combustion interne (non représenté) du véhicule 4 automobile.

La matière dans laquelle est réalisée le réservoir 3 de liquide est, de préférence, une matière ayant une bonne résistance chimique à l'urée. Il s'agit en général de matière plastique. Les polyoléfines, en particulier le polyéthylène et, plus particulièrement, le polyéthylène haute densité (PEHD), constituent des matériaux préférés. Ce réservoir peut être réalisé par tout procédé de transformation connu. Un mode de mise en œuvre connu est le procédé de moulage par injection. Un mode de mise en œuvre préféré est le procédé de moulage par extrusion-soufflage. Dans ce procédé, une paraison - en une ou plusieurs parties - est obtenue par extrusion puis mise en forme par soufflage dans un moule. Le moulage du réservoir d'un seul tenant à partir d'une paraison en une seule partie donne de bons résultats.

Le dispositif 1 d'alimentation en liquide 2 comprend notamment un boitier 5, une pompe 6 d'alimentation et un ensemble 7 de filtration (figures 2, 3, 4 et 7).

Le boitier 5 forme un organe support pour les différentes unités fonctionnelles du dispositif 1 d'alimentation en liquide 2. Dans le cas présent, la pompe 6 d'alimentation est logée à l'intérieur du boitier 5 et l'ensemble 7 de filtration est agencé à l'extérieur du boitier 5 et porté par ce boitier 5 (figures 2). Plus particulièrement, le dispositif 1 d'alimentation en liquide 2 comprend des moyens de fixation amovible (non représentés) de l'ensemble de filtration sur le boitier 5. De préférence, ces moyens de fixation amovible ne nécessitent pas l'utilisation d'un outil pour solidariser ou désolidariser l'ensemble 7 de filtration et le boitier 5. Par exemple, les moyens de fixation amovible sont des moyens de fixation par clipsage ou par vissage permettant de clipser ou de visser l'ensemble 7 de filtration directement sur le boitier 5.

Les autres unités fonctionnelles du dispositif 1 d'alimentation en liquide 2 sont classiques et ne sont pas représentés par soucis de clarté. Le boitier 5 peut être réalisé en tout matériau présentant une bonne résistance chimique à l'urée. Par exemple, le boitier 5 est réalisé en matière thermoplastique.

La pompe 6 d'alimentation est destinée à pomper du liquide depuis le réservoir 3 de liquide vers un dispositif de consommation de ce liquide (non représenté). Dans le cas présent, le liquide étant un précurseur d'ammoniac, le dispositif de consommation de ce liquide est un catalyseur de réaction de réduction catalytique sélective. On comprend que le dispositif de consommation de liquide est différent en fonction de l'utilisation souhaitée du dispositif 1 d'alimentation en liquide 2, et plus particulièrement en fonction de la nature du liquide 2 contenu dans le réservoir 3 de liquide 2. La pompe 6 d'alimentation utilisée est connue en elle-même et ne sera pas décrite plus en détails ici. On comprend que la pompe 6 d'alimentation peut notamment correspondre à une pompe 6 d'alimentation classiquement utilisée pour l'injection de précurseur d'ammoniac dans le cadre d'une réaction de réduction catalytique sélective dans un véhicule 4 automobile.

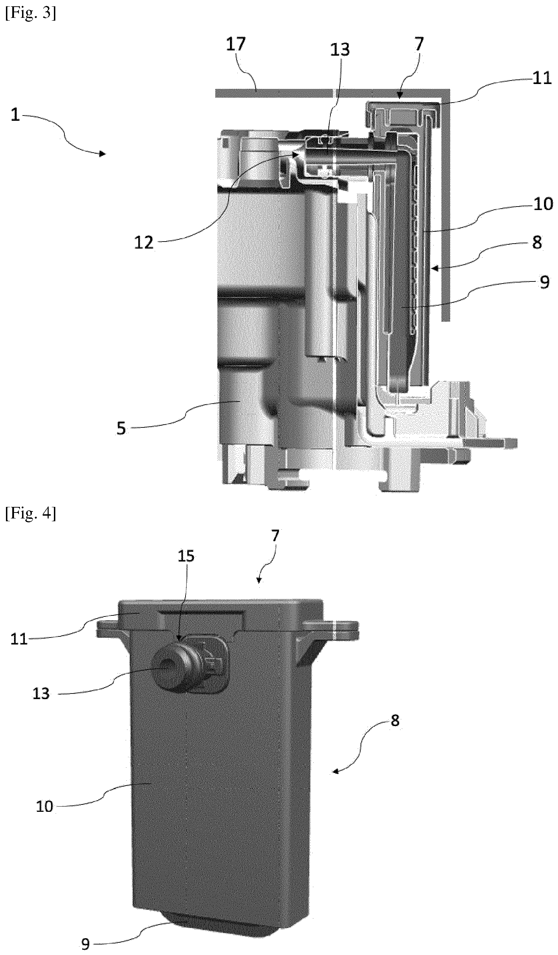

L'ensemble 7 de filtration est destiné à filtrer le liquide 2 pompé par la pompe 6 d'alimentation afin d'assurer que le liquide 2 injecté dans la réaction de réduction catalytique sélective soit substantiellement dépourvu d'impuretés. L'ensemble 7 de filtration comprend notamment un logement 8 dans lequel est logé un organe 9 de filtration ([Fig.4]).

Le logement 8 a une forme générale parallélépipédique avec une première extrémité longitudinale fermée et une deuxième extrémité longitudinale, opposée à la première extrémité longitudinale, qui est ouverte. Dans le cas présent, le logement 8 est formé en deux parties, une première partie formant le corps 10 principal du logement 8 et une deuxième partie formant un couvercle 11 de fermeture destiné à obturer de manière étanche à l'air et au liquide 2 présent dans le réservoir 3 de liquide la première extrémité longitudinale du logement 8. Alternativement, le logement 8 peut être fabriqué de manière à ce que le corps 10 et le couvercle 11 soient venus de matière.

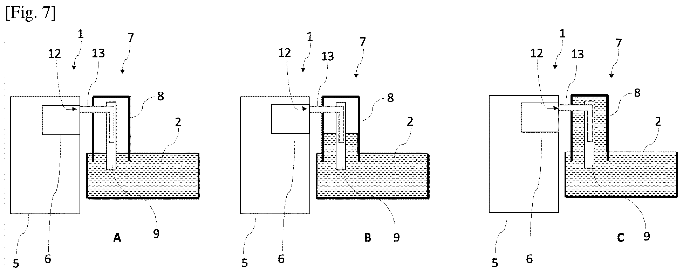

Le logement 8 forme un siphon qui est raccordé à une entrée 12 d'aspiration de la pompe 6 d'alimentation au niveau de sa première extrémité longitudinale fermée par l'intermédiaire d'un conduit 13 d'alimentation. La deuxième extrémité longitudinale ouverte du logement 8 formant siphon débouche dans le liquide 2 contenu dans le réservoir 3 de liquide 2 de façon à ce qu'un trajet de ce liquide 2 dans le siphon passe par un niveau dit élevé, qui, lorsque le niveau de liquide dans le réservoir 3 de liquide se situe en dessous d'un seuil prédéterminé est supérieur au niveau du liquide 2 dans le réservoir 3 de liquide 2 (voir [Fig.7]). Par exemple, le seuil prédéterminé peut être situé sensiblement au niveau de la première extrémité longitudinale ouverte du logement 8 formant siphon. De préférence, le seuil prédéterminé correspond au niveau de liquide dans le logement 8 formant siphon pour lequel l'organe 9 de filtration est immergé dans le liquide 2.

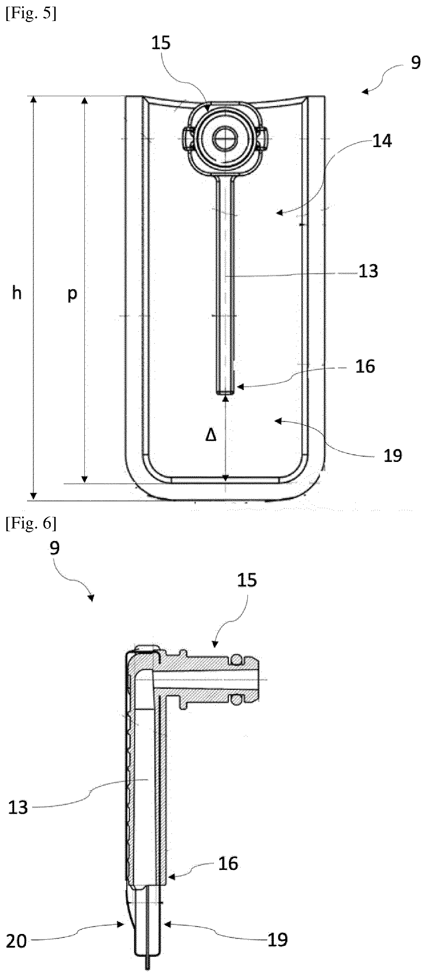

L'organe 9 de filtration est réalisé à partir d'une maille filtrante souple fixée sur une armature rigide. La maille filtrante est souple et est par exemple enroulée par-dessus ou par-dessous l'armature rigide. Avantageusement, la maille filtrante et l'armature rigide sont réalisés en matière thermoplastique et sont soudées l'une à l'autre. Alternativement, la maille filtrante souple est fabriquée d'une seul tenant avec l'armature rigide (figures 5 et 6).

L'organe 9 de filtration comprend une zone de filtration qui s'étend verticalement dans le logement 8 formant siphon. Autrement dit, l'organe 9 de filtration est disposé à la verticale dans le logement 8 qui est lui aussi disposé verticalement lorsqu'il est monté sur le boitier 5 (figures 2, 3 et 7). Plus particulièrement, la zone de filtration de l'organe 9 de filtration comprend une poche 14 de matériau de filtration formée par la maille filtrante.

La poche 14 comprend au moins une paroi délimitant une cavité ouverte à une de ses extrémité et fermée à une autre de ses extrémités formant un fond de la poche. Dans le cas présent, l'ouverture de la poche 14 permet le passage du conduit 13 d'alimentation. Selon le présent mode de réalisation, la poche 14 comprend deux faces latérales de filtration 19, 20, chaque face latérale de filtration 19, 20 étant agencée en regard et à distance d'une paroi du logement 8 (figures 3 et 7).

Dans le cas présent, le rapport V/h, où V est le volume de l'organe 9 de filtration et h la hauteur de l'organe 9 de filtration est compris entre 400 mm² et 800 mm², de préférence le rapport V/h est environ égal à 600 mm². Dans le présent mode de réalisation, la poche 14 de filtration a une hauteur p d'environ 68 mm qui est légèrement inférieure à la hauteur h de l'organe de filtration ([Fig.5]).

Le conduit 13 d'alimentation a une forme générale de « L » renversé et s'étend verticalement dans la poche 14 entre des points hauts et bas de la poche 14. Une première extrémité 15 haute du conduit 13 d'alimentation est raccordée à l'entrée 12 d'aspiration de la pompe 6 d'alimentation et permet ainsi de mettre en communication fluidique l'intérieur du logement 8 formant siphon et l'entrée 12 d'aspiration de la pompe 6 d'alimentation (figures 3 et 7). Une deuxième extrémité 16 basse du conduit 13 d'alimentation débouche à l'intérieur de la poche 14 (figures 5 et 6). Selon les modes de réalisation, la hauteur à laquelle la deuxième extrémité 16 basse du conduit 13 d'alimentation débouche dans la poche 14 varie. Dans le cas présent et de manière avantageuse, l'écart Δ entre la deuxième extrémité 16 basse du conduit 13 d'alimentation et le fond de la poche 14 est d'environ 15,5 mm, ce qui représente environ 23 % de la hauteur p de la poche 14 ([Fig.5]). Avantageusement, l'écart Δ entre la deuxième extrémité 16 basse du conduit 13 d'alimentation et le fond de la poche 14 est compris entre 10 % et 90 %, de préférence l'écart Δ est environ égal à 25 % de la hauteur de la poche.

Le dispositif 1 d'alimentation en liquide comprend en outre des moyens 17 de chauffage du logement 8 formant siphon. Dans le cas présent, ces moyens 17 de chauffage sont formés par une nappe chauffante recouvrant en partie le logement 8 formant siphon. Selon d'autres modes de réalisation, tout moyen de chauffage apte à être disposé à l'intérieur d'un réservoir 3 de liquide 2 afin de chauffer le logement 8 formant siphon peut être utilisé. Par souci de clarté, les moyens 17 de chauffage sont représentés uniquement sur la [Fig.3].

On décrit ci-après, par référence à la [Fig.7], un exemple de fonctionnement du dispositif 1 d'alimentation en liquide 2 selon l'invention.

Comme indiqué précédemment, le dispositif 1 d'alimentation en liquide 2 est mis en œuvre dans le cas présent pour une réaction de réduction catalytique sélective afin d'injecter du liquide 2, ici un précurseur d'ammoniac, dans le flux de gaz d'échappement du véhicule 4 automobile où il est hydrolysé afin de convertir les oxydes d'azote (NO_{X}) en azote (N₂) et en eau (H₂O).

La figure 7A représente l'état du dispositif 1 d'alimentation en liquide 2 avant son utilisation, c'est-à-dire avant la mise en marche de la pompe 6 d'alimentation. Ici, le niveau de liquide 2 dans le réservoir 3 de liquide est relativement bas de sorte qu'une portion importante de l'ensemble 7 de filtration, et notamment du logement 8 formant siphon, n'est pas immergée dans le liquide 2. De l'air est présent à l'intérieur du logement 8 formant siphon.

Lorsqu'une injection de liquide 2 dans le flux de gaz d'échappement est souhaitée, la pompe 6 d'alimentation est activée. Lors d'une première étape d'amorçage, la pompe 6 d'alimentation aspire via son entrée 12 d'aspiration et le long du conduit 13 d'alimentation un mélange d'air présent dans le logement 8 formant siphon et de liquide 2. L'aspiration de l'air crée une dépression qui entraine une augmentation du niveau de liquide 2 à l'intérieur du logement 8 formant siphon (figure 7B).

À l'issue de la période d'amorçage, tout ou une plus grande partie de l'air qui était présent à l'intérieur du logement 8 formant siphon a été aspiré par la pompe 6 d'alimentation de sorte que le logement 8 formant siphon est rempli de liquide 2 au moins de façon à immerger complètement ou presque complètement l'organe 9 de filtration (figure 7C). On remarque que le niveau de liquide 2 dans le logement 8 formant siphon est ici supérieur au niveau de liquide 2 présent dans le réservoir 3 de liquide 2. L'organe 9 de filtration est alors immergé dans le liquide et n'est pas en contact avec de l'air. À ce stade, la pompe 6 d'alimentation ne peut donc plus, ou pratiquement plus, aspirer de l'air. Ainsi, le risque d'une perte de pression d'injection du liquide 2 est réduit voire nul. En outre, l'immersion de l'organe 9 de filtration à l'issue de l'amorçage de la pompe est obtenue quel que soit l'importance du colmatage de l'organe 9 de filtration. Ainsi, même avec un colmatage élevé de l'organe 9 de filtration il est possible de continuer à utiliser cet organe 9 de filtration avec un dispositif 1 d'alimentation en liquide 2 selon l'invention puisque l'air ayant été chassé du logement 8 formant siphon, il ne peut dans tous les cas plus être aspiré par la pompe 6 d'alimentation et engendrer de chute de pression d'injection du liquide 2.

### Exemples

On décrit ci-après les résultats d'un test visant à mesurer l'efficacité du dispositif 1 d'alimentation en liquide 2 selon l'invention en fonction du niveau de colmatage de l'organe 9 de filtration. Ainsi, les organes 9 de filtration ont été testés pour un niveau de colmatage, en pourcentage de la hauteur h de l'organe 9 de filtration, de 0 % (témoin), 10 %, 20 %, 30 %, 40 % et 50 %. Pour maitriser le niveau de colmatage, celui-ci a été réalisé artificiellement en recouvrant l'organe 9 de filtration d'une résine époxy sur une hauteur correspondant au pourcentage de niveau de colmatage souhaité en partant de l'extrémité inférieure de l'organe 9 de filtration. L'efficacité du dispositif 1 d'alimentation en liquide 2 selon l'invention a été testé en mesurant la quantité de solution aqueuse, ici de l'urée, qu'il est possible d'injecter en utilisant l'organe 9 de filtration seul, comme cela est le cas dans l'art antérieur, ou logé dans un logement 8 formant siphon d'un ensemble 7 de filtration selon l'invention. Les résultats du test sont présentés dans le tableau 1.

**[Tableaux1]**

| Niveau de colmatage | Volume d'urée à injecter (kg) | Volume d'urée injecté avec un dispositif d'alimentation en liquide de l'art antérieur (kg) | Volume d'urée injecté avec un dispositif d'alimentation en liquide selon l'invention (kg) |
|---|---|---|---|
| 0 % | 5,000 | 4,821 | Non applicable (NA) |
| 10 % | 5,000 | 4,540 | 4,824 |
| 20 % | 5,000 | 4,459 | 4,844 |
| 30 % | 5,000 | 3,685 | 4,821 |
| 40 % | 5,000 | 3,343 | 4,810 |
| 50 % | 5,000 | 3,247 | 4,841 |

Le volume d'urée est mesuré en kilogrammes plutôt qu'en litres afin de faciliter les mesures. Alternativement, il serait possible de mener ce test en mesurant le volume d'urée en litres. Selon ce test, 5 kg d'urée sont à injecter par un dispositif 1 d'alimentation en liquide 2 comprenant soit un organe de filtration seul (cas représentant l'art antérieur), soit un ensemble 7 de filtration selon l'invention dans lequel l'organe 9 de filtration est logé dans un logement 8 formant siphon.

Le cas où le niveau de colmatage est à 0 % a été testé uniquement sur le dispositif d'alimentation en liquide de l'art antérieur afin de donner une valeur de référence. Ainsi, dans l'art antérieur, avec un organe de filtration qui n'est pas colmaté, généralement parce qu'il est neuf, le volume d'urée injecté à partir de 5 kg d'urée est de 4,821 kg.

Dans le cas où l'organe 9 de filtration est colmaté à 10 %, on observe une diminution de l'urée injecté pour le dispositif d'alimentation en liquide de l'art antérieur. Le volume d'urée injecté est de 4,540 kg au lieu de 4,821 kg lorsque l'organe 9 de filtration n'est pas colmaté, soit une perte de 0,281 kg d'urée. On remarque que cette baisse n'est pas visible avec le dispositif 1 d'alimentation en liquide 2 selon l'invention puisque 4,824 kg d'urée ont été injectés. Ainsi, on observe même une légère augmentation du volume d'urée injecté par rapport au cas témoin (augmentation de 0,003 kg). À 10 % de colmatage, les capacités de filtration de l'ensemble 7 de filtration selon l'invention sont donc meilleures que celles de l'art antérieur et permettent de maintenir un niveau de filtration sensiblement équivalent à un niveau de filtration obtenu lorsque l'organe 9 de filtration est neuf.

Dans le cas où l'organe 9 de filtration est colmaté à 20 %, on observe à nouveau une diminution du volume d'urée injecté pour le dispositif d'alimentation en liquide de l'art antérieur. Le volume d'urée injecté est de 4,459 kg au lieu de 4,821 kg lorsque l'organe 9 de filtration n'est pas colmaté, soit une perte de 0,362 kg d'urée. À nouveau, on remarque que cette baisse n'est pas visible avec le dispositif 1 d'alimentation en liquide 2 selon l'invention puisque 4,844 kg d'urée ont été injectés. Ainsi, on observe encore une légère augmentation du volume d'urée injecté par rapport au cas témoin (augmentation de 0,023 kg). À 20 % de colmatage, les capacités de filtration de l'ensemble 7 de filtration selon l'invention sont donc meilleures que celles de l'art antérieur et permettent de maintenir un niveau de filtration sensiblement équivalent à un niveau de filtration obtenu lorsque l'organe 9 de filtration est neuf.

Dans le cas où l'organe 9 de filtration est colmaté à 30 %, on observe à nouveau une diminution du volume d'urée injecté pour le dispositif d'alimentation en liquide de l'art antérieur. Le volume d'urée injecté est de 3,685 kg au lieu de 4,821 kg lorsque l'organe 9 de filtration n'est pas colmaté, soit une perte de 1,136 kg d'urée. À nouveau, on remarque que cette baisse n'est pas visible avec le dispositif 1 d'alimentation en liquide 2 selon l'invention puisque 4,821 kg d'urée ont été injectés, soit autant qu'avec un organe 9 de filtration neuf. À 30 % de colmatage, les capacités de filtration de l'ensemble 7 de filtration selon l'invention sont donc meilleures que celles de l'art antérieur et permettent de maintenir un niveau de filtration sensiblement équivalent à un niveau de filtration obtenu lorsque l'organe 9 de filtration est neuf.

Dans le cas où l'organe 9 de filtration est colmaté à 40 %, on observe à nouveau une diminution du volume d'urée injecté pour le dispositif d'alimentation en liquide de l'art antérieur. Le volume d'urée injecté est de 3,343 kg au lieu de 4,821 kg lorsque l'organe 9 de filtration n'est pas colmaté, soit une perte de 1,478 kg d'urée. On remarque que cette baisse n'est pas très importante avec le dispositif 1 d'alimentation en liquide 2 selon l'invention puisque 4,810 kg d'urée ont été injectés, soit une perte de seulement 0,011 kg d'urée. A 40 % de colmatage, les capacités de filtration de l'ensemble 7 de filtration selon l'invention sont donc meilleures que celles de l'art antérieur et permettent de maintenir un niveau de filtration sensiblement équivalent à un niveau de filtration obtenu lorsque l'organe 9 de filtration est neuf.

Dans le cas où l'organe 9 de filtration est colmaté à 50 %, on observe à nouveau une diminution du volume d'urée injecté pour le dispositif d'alimentation en liquide de l'art antérieur. Le volume d'urée injecté est de 3,247 kg au lieu de 4,821 kg lorsque l'organe 9 de filtration n'est pas colmaté, soit une perte de 1,574 kg d'urée. À nouveau, on remarque que cette baisse n'est pas présente avec le dispositif 1 d'alimentation en liquide 2 selon l'invention puisque 4,841 kg d'urée ont été injectés, soit une augmentation de 0,020 kg d'urée par rapport au cas témoin. À 50 % de colmatage, les capacités de filtration de l'ensemble 7 de filtration selon l'invention sont donc meilleures que celles de l'art antérieur et permettent de maintenir un niveau de filtration sensiblement équivalent à un niveau de filtration obtenu lorsque l'organe 9 de filtration est neuf.

Ce test permet de conclure sur l'efficacité de filtration d'un organe 9 de filtration au cours du temps, c'est-à-dire au fur et à mesure qu'il se colmate. La perte d'efficacité de filtration pour les organes de filtration de l'art antérieur correspond en pratique à un risque accru de perte de pression d'injection au cours de l'utilisation du dispositif 1 d'alimentation en liquide 2. Comme indiqué précédemment, cette perte de pression d'injection est désavantageuse, notamment dans les cas où la quantité de liquide 2 à injecter doit être précisément dosée, puisqu'elle ne permet pas d'obtenir un niveau de précision acceptable en ce qui concerne la quantité de liquide 2 injectée. Ainsi, ce test montre que l'utilisation d'un dispositif 1 d'alimentation en liquide 2 selon l'invention permet de préserver les capacités de filtration de l'organe 9 de filtration au cours du temps, même pour des colmatages importants, et ainsi de réduire le risque de perte de pression d'injection du liquide 2 au cours du temps.

### Liste de références

1 : dispositif d'alimentation en liquide
2 : liquide
3 : réservoir
4 : véhicule automobile
5 : boitier
6 : pompe d'alimentation
7 : ensemble de filtration
8 : logement
9 : organe de filtration
10 : corps du logement
11 : couvercle du logement
12 : entrée d'aspiration de la pompe d'alimentation
13 : conduit d'alimentation
14 : poche de l'organe de filtration
15 : première extrémité haute du conduit d'alimentation
16 : deuxième extrémité basse du conduit d'alimentation
17 : moyens de chauffage du logement formant siphon
18 : dispositif de réduction catalytique sélective
19, 20 : faces latérales de filtration
h : hauteur de l'organe de filtration
p : hauteur de la poche de filtration
Δ : écart entre la deuxième extrémité basse du conduit d'alimentation et le fond de la poche

## Revendications

1. Dispositif (1) d'alimentation en liquide (2) pour véhicule (4) automobile, comprenant :
- une pompe (6) d'alimentation destinée à pomper du liquide (2) depuis un réservoir (3) de liquide (2) vers un dispositif de consommation de ce liquide (2), et
- un ensemble (7) de filtration destiné à filtrer le liquide (2) pompé par la pompe (6) d'alimentation, l'ensemble (7) de filtration comprenant un logement (8) dans lequel est logé un organe (9) de filtration,
dans lequel le logement (8) forme un siphon raccordé à une entrée (12) d'aspiration de la pompe (6) d'alimentation et comporte une extrémité ouverte destinée à déboucher dans le liquide (2) contenu dans le réservoir (3) de liquide (2) de façon à ce qu'un trajet de ce liquide (2) dans le siphon passe par un niveau dit élevé, qui, lorsque le niveau du liquide (2) dans le réservoir (3) de liquide (2) se situe en dessous d'un seuil prédéterminé est supérieur au niveau du liquide (2) dans le réservoir (3) de liquide (2),
dans lequel l'organe (9) de filtration comprend une zone de filtration sous la forme d'une poche (14) de matériau de filtration s'étendant verticalement dans le logement (8) formant siphon, **caractérisé en ce que** le dispositif (1) d'alimentation en liquide (2) comprend en outre un conduit (13) d'alimentation s'étendant verticalement dans la poche (14) entre des points hauts et bas de la poche (14), une première extrémité (15) haute du conduit (13) d'alimentation étant raccordée à l'entrée (10) d'aspiration de la pompe (6) d'alimentation et une deuxième extrémité (16) basse débouchant à l'intérieur de la poche (14).

2. Dispositif (1) d'alimentation en liquide (2) selon la revendication 1, dans lequel le rapport V/h, où V est le volume de l'organe (9) de filtration et h la hauteur de l'organe (9) de filtration, est compris entre 400 mm² et 800 mm², de préférence le rapport V/h est environ égal à 600 mm².

3. Dispositif (1) d'alimentation en liquide selon la revendication 1 ou 2, dans lequel l'écart (Δ) entre la deuxième extrémité (16) basse du conduit (13) d'alimentation et le fond de la poche (14) est compris entre 10 et 90 % de la hauteur (p) de la poche (14), de préférence, l'écart (Δ) est environ égal à 25 % de la hauteur (p) de la poche (14).

4. Dispositif (1) d'alimentation en liquide (2) selon l'une quelconque des revendications précédentes, dans lequel la poche (14) comprend au moins deux faces latérales de filtration (19, 20), chaque face latérale de filtration étant agencée en regard et à distance d'une paroi du logement (8).

5. Dispositif (1) d'alimentation en liquide (2) selon l'une quelconque des revendications précédentes, comprenant des moyens (17) de chauffage du logement (8) formant siphon.

6. Dispositif (1) d'alimentation en liquide (2) selon l'une quelconque des revendications précédentes, dans lequel la pompe (6) d'alimentation est logée dans un boitier (5), l'ensemble (7) de filtration étant agencé à l'extérieur du boitier (5) et porté par ce boitier (5).

7. Dispositif (1) d'alimentation en liquide (2) selon la revendication 6, comprenant en outre des moyens de fixation amovible de l'ensemble (7) de filtration sur le boitier (5).

8. Dispositif (1) d'alimentation en liquide (2) selon l'une quelconque des revendications précédentes, dans lequel le liquide (2) est une solution aqueuse, de préférence un précurseur d'ammoniac.

9. Réservoir (1) de liquide (2) pour véhicule (4) automobile, **caractérisé en ce qu'**il est équipé d'un dispositif (1) d'alimentation en liquide (2) selon l'une quelconque des revendications précédentes.

10. Dispositif (18) de réduction catalytique sélective destiné à purifier des gaz d'échappement d'un moteur à combustion interne d'un véhicule automobile, **caractérisé en ce qu'**il comprend un réservoir (3) de liquide (2) selon la revendication 9, dans lequel le liquide (2) est un précurseur d'ammoniac.

11. Véhicule (4) automobile **caractérisé en ce qu'**il comprend un réservoir (3) de liquide (2) selon la revendication 9.

## Patentansprüche

1. Vorrichtung (1) zur Versorgung mit Flüssigkeit (2) für Kraftfahrzeug (4), umfassend:
- eine Versorgungspumpe (6), die dazu bestimmt ist, Flüssigkeit (2) von einem Tank (3) für Flüssigkeit (2) zu einer Vorrichtung zum Verbrauch dieser Flüssigkeit (2) zu pumpen, und
- eine Filtrierungsanordnung (7), die dazu bestimmt ist, die von der Versorgungspumpe (6) gepumpte Flüssigkeit (2) zu filtern, wobei die Filtrierungsanordnung (7) eine Aufnahme (8) umfasst, in der ein Filtrierungselement (9) aufgenommen ist,
wobei die Aufnahme (8) einen Siphon bildet, der mit einem Ansaugeinlass (12) der Versorgungspumpe (6) verbunden ist und ein offenes Ende aufweist, das dazu bestimmt ist, in der Flüssigkeit (2), die in dem Tank (3) für Flüssigkeit (2) enthalten ist, so auszumünden, dass ein Durchfluss dieser Flüssigkeit (2) in dem Siphon eine so genannte hohe Höhe durchläuft, die, wenn der Pegel der Flüssigkeit (2) in dem Tank (3) für Flüssigkeit (2) unterhalb eines vorher festgelegten Schwellwerts liegt, größer als der Pegel der Flüssigkeit (2) in dem Tank (3) für Flüssigkeit (2) ist, wobei das Filtrierungselement (9) eine Filtrierungszone in Form einer Tasche (14) für Filtrierungsmaterial umfasst, die sich vertikal in der siphonbildenden Aufnahme (8) erstreckt,
**dadurch gekennzeichnet, dass** die Vorrichtung (1) zur Versorgung mit Flüssigkeit (2) ferner eine Versorgungsrohrleitung (13) umfasst, die sich in der Tasche (14) vertikal zwischen dem oberen und unteren Punkt der Tasche (14) erstreckt, wobei ein erstes oberes Ende (15) der Versorgungsrohrleitung (13) mit dem Ansaugeinlass (12) der Versorgungspumpe (6) verbunden ist und wobei ein zweites unteres Ende (16) im Inneren der Tasche (14) ausmündet.

2. Vorrichtung (1) zur Versorgung mit Flüssigkeit (2) nach Anspruch 1, wobei das Verhältnis V/h, wobei V das Volumen des Filtrierungselements (9) und h die Höhe des Filtrierungselements (9) ist, zwischen 400 mm² und 800 mm² beträgt, bevorzugt das Verhältnis V/h etwa gleich 600 mm² ist.

3. Vorrichtung (1) zur Versorgung mit Flüssigkeit nach Anspruch 1 oder 2, wobei der Abstand (A) zwischen dem zweiten unteren Ende (16) der Versorgungsrohrleitung (13) und dem Boden der Tasche (14) zwischen 10 und 90 % der Höhe (p) der Tasche (14) beträgt, bevorzugt der Abstand (A) etwa gleich 25 % der Höhe (p) der Tasche (14) ist.

4. Vorrichtung (1) zur Versorgung mit Flüssigkeit (2) nach einem der vorhergehenden Ansprüche, wobei die Tasche (14) mindestens zwei seitliche Filtrierungsflächen (19, 20) umfasst, wobei jede seitliche Filtrierungsfläche einer Wand der Aufnahme (8) zugewandt und von ihr beabstandet angeordnet ist.

5. Vorrichtung (1) zur Versorgung mit Flüssigkeit (2) nach einem der vorhergehenden Ansprüche, umfassend Mittel (17) zum Erwärmen der siphonbildenden Aufnahme (8).

6. Vorrichtung (1) zur Versorgung mit Flüssigkeit (2) nach einem der vorhergehenden Ansprüche, wobei die Versorgungspumpe (6) in einem Gehäuse (5) aufgenommen ist, wobei die Filtrierungsanordnung (7) außerhalb des Gehäuses (5) angeordnet ist und von diesem Gehäuse (5) getragen wird.

7. Vorrichtung (1) zur Versorgung mit Flüssigkeit (2) nach Anspruch 6, ferner umfassend Mittel zur lösbaren Befestigung der Filtrierungsanordnung (7) an dem Gehäuse (5).

8. Vorrichtung (1) zur Versorgung mit Flüssigkeit (2) nach einem der vorhergehenden Ansprüche, wobei die Flüssigkeit (2) eine wässrige Lösung, bevorzugt ein Ammoniak-Vorläufer ist.

9. Tank (1) für Flüssigkeit (2) für Kraftfahrzeug (4), **dadurch gekennzeichnet, dass** er mit einer Vorrichtung (1) zur Versorgung mit Flüssigkeit (2) nach einem der vorhergehenden Ansprüche ausgestattet ist.

10. Selektive katalytische Reduktionsvorrichtung (18), dazu bestimmt, Abgase einer Brennkraftmaschine eines Kraftfahrzeugs zu reinigen, **dadurch gekennzeichnet, dass** sie einen Tank (3) für Flüssigkeit (2) nach Anspruch 9 umfasst, wobei die Flüssigkeit (2) ein Ammoniak-Vorläufer ist.

11. Kraftfahrzeug (4), **dadurch gekennzeichnet, dass** es einen Tank (3) für Flüssigkeit (2) nach Anspruch 9 umfasst.

## Claims

1. A device (1) for supplying liquid (2) for a motor vehicle (4), comprising:
- a supply pump (6) intended to pump liquid (2) from a liquid (2) tank (3) to a device consuming said liquid (2), and
- a filtration assembly (7) for filtering the liquid (2) pumped by the supply pump (6), the filtration assembly (7) comprising a housing (8) in which a filtration member (9) is housed,
wherein the housing (8) forms a siphon connected to a suction inlet (12) of the supply pump (6) and has an open end intended to open into the liquid (2) contained in the liquid (2) tank (3) such that a path of said liquid (2) through the siphon passes through a so-called high level, which, when the level of the liquid (2) in the liquid (2) tank (3) is below a predetermined threshold, is higher than the level of the liquid (2) in the liquid (2) tank (3),
wherein the filtration member (9) comprises a filtration zone in the form of a pocket (14) of filtration material extending vertically within the housing (8) forming the siphon, **characterized in that** the device (1) for supplying liquid (2) further comprises a supply conduit (13) extending vertically within the pocket (14) between high and low points of the pocket (14), a first high end (15) of the supply conduit (13) being connected to the suction inlet (10) of the supply pump (6) and a second low end (16) opening into the interior of the pocket (14).

2. The device (1) for supplying liquid (2) according to claim 1, wherein the ratio V/h, where V is the volume of the filtration member (9) and h is the height of the filtration member (9), is between 400 mm² and 800 mm², preferably the ratio V/h is approximately equal to 600 mm².

3. The device (1) for supplying liquid according to claim 1 or 2, wherein the distance (Δ) between the second low end (16) of the supply conduit (13) and the bottom of the pocket (14) is between 10 and 90% of the height (p) of the pocket (14), preferably, the distance (Δ) is approximately equal to 25% of the height (p) of the pocket (14).

4. The device (1) for supplying liquid (2) according to any one of the preceding claims, wherein the pocket (14) comprises at least two filtration side walls (19, 20), each filtration side wall being arranged opposite and at a distance from a wall of the housing (8).

5. The device (1) for supplying liquid (2) according to any one of the preceding claims, comprising means (17) for heating the housing (8) forming the siphon.

6. The device (1) for supplying liquid (2) according to any one of the preceding claims, in which the supply pump (6) is housed in a casing (5), the filtration assembly (7) being arranged outside the casing (5) and mounted on said casing (5).

7. The device (1) for supplying liquid (2) according to claim 6, further comprising means for removably attaching the filtration assembly (7) to the casing (5).

8. The device (1) for supplying liquid (2) according to any one of the preceding claims, wherein the liquid (2) is an aqueous solution, preferably an ammonia precursor.

9. A liquid (2) tank (1) for a motor vehicle (4), **characterized in that** it is equipped with a device (1) for supplying liquid (2) according to any one of the preceding claims.

10. A selective catalytic reduction device (18) for purifying exhaust gases from an internal combustion engine of a motor vehicle, **characterized in that** it comprises a liquid (2) tank (3) according to claim 9, wherein the liquid (2) is an ammonia precursor.

11. Motor vehicle (4) **characterized in that** it comprises a liquid (2) tank (3) according to claim 9.
